# EUROPÄISCHE PATENTSCHRIFT

(11) **EP 3 910 231 B1**
(45) Veröffentlichungstag und Bekanntmachung des Hinweises auf die Patenterteilung: **02.11.2022**
(21) Anmeldenummer: 21168060.8
(22) Anmeldetag: 13.04.2021
(51) Int. Cl.: F16P 3/14

(54) **SICHERHEITSSYSTEM**
SAFETY SYSTEM
SYSTÈME DE SÉCURITÉ

(30) Priorität: 11.05.2020 DE 102020112699
(43) Veröffentlichungstag der Anmeldung: 17.11.2021
(73) Patentinhaber: SICK AG, 79183 Waldkirch (DE)
(72) Erfinder: Brunner, Fabio, 79100 Freiburg (DE); Hammes, Dr. Markus, 79117 Freiburg (DE); Ams, Mathias, 79211 Denzlingen (DE)

(56) Entgegenhaltungen:
- EP-B1- 2 282 106
- DE-A1-102014 101 513
- US-B2- 7 170 406

## Beschreibung

Die vorliegende Erfindung betrifft ein Sicherheitssystem zur Lokalisierung und Identifikation einer Person oder eines Objektes gemäß dem Oberbegriff von Anspruch 1 und ein Verfahren mit einem Sicherheitssystem zur Lokalisierung und Identifikation einer Person oder eines Objektes gemäß dem Oberbegriff von Anspruch 13.

Die Sensorik der funktionalen Sicherheit ist aktuell auf dem Stand, dass grundlegende physikalische Merkmale der Umgebung, beispielsweise Geometrieinformationen wie z. B. Abstände, Längen oder die Anwesenheit von Objekten an sich zuverlässig erfasst und in einfachen Sicherheitsfunktionen verwendet werden können. Dagegen sind höherwertige Informationen oder abgeleitete Bedeutungen, zum Beispiel die Information, um was für ein Objekt es sich handelt, in aller Regel nicht zuverlässig durch Sensoren ermittelbar und daher auch nicht sicherheitstechnisch nutzbar.

In diesem Sinne ist insbesondere die Information, ob es sich bei einem Objekt, um eine Person handelt oder nicht, für hochwertige Sicherheitsfunktionen interessant. Diese sichere Objektidentifizierung konnte bisher noch nicht realisiert werden, ist aber im Hinblick auf die situationsbezogene Steuerung der Maschine sehr wichtig. Im Allgemeinen ist bereits eine Objektklassifikation ein sehr aufwändiges Verfahren, da hierfür in der Regel Bilddaten verwendet werden, die dann sehr aufwändig prozessiert werden müssen. Dies führt in der Regel zu teuren Sensoren mit oftmals erheblichen Latenzzeiten.

Optoelektronische Sicherheitssensoren, beispielsweise Laserscanner oder Lichtgitter erfassen sehr zuverlässig die Anwesenheit eines Objektes oder einer Person. Derartige Sicherheitssensoren finden eine große Verbreitung bei der Gefahrstellenabsicherung von Maschinen und ermöglichen die Implementierung sehr einfacher Sicherheitsfunktionen.

Maschinenbewegungen werden bei Detektion eines sicherheitsrelevanten Objekts in aller Regel gestoppt oder verlangsamt. Dabei bleibt unberücksichtigt, um was für ein Objekt es sich handelt. Diese Information ist im Allgemeinen auch gar nicht verfügbar bzw. nicht sicherheitstechnisch verwendbar.

Eine einfache Detektionsfunktion vorhandener Sicherheitssensoren erlaubt eine zuverlässige Absicherung von Gefahrstellen, hat aber in alle Regel nachteilige Auswirkungen auf eine Produktivität einer Maschine. Unabhängig von einer Klasse des detektierten Objekts beispielsweise einer Person, einem Gegenstand oder einer Störung bzw. störenden Gegenständen muss sicherheitsgerichtet abgeschaltet werden, selbst wenn diese Reaktion in bestimmten Fällen nicht erforderlich wäre.

Insbesondere ein sicheres Wissen, dass es sich bei einem detektierten Objekt um eine Person handelt oder nicht, würde eine sehr viel spezifischere Kontrolle einer potenziell gefährlichen Maschine ermöglichen.

Aus dem Stand der Technik sind insbesondere die folgenden Patent- Offenlegungsschriften bekannt: US 7170406 B2, EP 2282106 B1 und DE 102014101513 A1.

Eine Aufgabe der Erfindung besteht darin, eine funktional sichere Erkennung von Personen oder Objekten zu ermöglichen.

Die Aufgabe wird gemäß Anspruch 1 gelöst durch ein Sicherheitssystem zur Lokalisierung und Identifikation einer Person oder eines Objektes, mit einer Steuer- und Auswerteeinheit, mit mindestens einem Funkortungssystem, mit mindestens einem Identifizierungssensor zur Identifizierung der Person oder des Objektes, wobei an der Person oder dem Objekt eine Markierung angeordnet ist, wobei das Funkortungssystem angeordnete Funkstationen aufweist, wobei an der Person oder dem Objekt mindestens ein Funktransponder angeordnet ist, wobei mittels dem Funkortungssystem Positionsdaten der Person oder des Objektes ermittelbar sind, wobei die Positionsdaten von der Funkstation des Funkortungssystems an die Steuer- und Auswerteeinheit übermittelbar sind, und mittels dem Identifizierungssensor Identifikationsdaten von der Markierung an der Person oder des Objekts ermittelbar sind, wobei die Identifikationsdaten von dem Identifizierungssensor an die Steuer- und Auswerteeinheit übermittelbar sind, wobei die Steuer- und Auswerteeinheit ausgebildet ist, die Positionsdaten des Funkortungssystems und die Identifikationsdaten des Identifizierungssensors zu vergleichen und bei gültiger Übereinstimmung geprüfte Personendaten oder geprüfte Objektdaten zu bilden.

Weiter wird die Aufgabe gemäß Anspruch 13 gelöst durch ein Verfahren mit einem Sicherheitssystem zur Lokalisierung und Identifikation einer Person oder eines Objektes, mit einer Steuer- und Auswerteeinheit, mit mindestens einem Funkortungssystem, mit mindestens einem Identifizierungssensor zur Identifizierung der Person oder des Objektes, wobei an der Person oder dem Objekt eine Markierung angeordnet ist, wobei das Funkortungssystem angeordnete Funkstationen aufweist, wobei an der Person oder dem Objekt mindestens ein Funktransponder angeordnet ist, wobei mittels dem Funkortungssystem Positionsdaten der Person oder des Objektes ermittelbar sind, wobei die Positionsdaten von der Funkstation des Funkortungssystems an die Steuer- und Auswerteeinheit übermittelbar sind, und mittels dem Identifizierungssensor Identifikationsdaten von der Markierung an der Person oder des Objekts ermittelbar sind, wobei die Identifikationsdaten von dem Identifizierungssensor an die Steuer- und Auswerteeinheit übermittelbar sind, wobei die Steuer- und Auswerteeinheit ausgebildet ist, die Positionsdaten des Funkortungssystems und die Identifikationsdaten des Identifizierungssensors zu vergleichen und bei gültiger Übereinstimmung geprüfte Personendaten oder geprüfte Objektdaten zu bilden.

Die Steuer- und Auswerteeinheit weist Eingänge, eine Verarbeitungseinheit und Ausgänge auf. An die Eingänge sind der Identifizierungssensor bzw. der Identifikationssensor und die Funkstationen angeschlossen. Die Steuer- und Auswerteeinheit kann eine modulare Steuer- und Auswerteeinheit sein, die über eine Software programmierbar ist.

Bei den Ausgängen der Steuer- und Auswerteeinheit kann es sich insbesondere um redundante Sicherheitsausgänge handeln. Dabei handelt es sich beispielsweise um halbleitergesteuerte Schaltausgänge, um beispielsweise einen Antrieb einer Maschine sicher abzuschalten.

Die Erfindung beruht darauf, die Person oder das Objekt durch zwei voneinander unabhängige Merkmale eindeutig zu bestimmen. Diese Merkmale sind die Identifikation, die über den Identifizierungssensor ermittelt wird sowie die Position, welche über das Funkortungssystem ermittelt wird. Damit wird die Position und eine zugehörige Identifizierung durch ein redundantes, insbesondere diversitäres System bestimmt.

Die Erfindung nutzt die Kombination von zwei diversitären Sensortechnologien aus, die sich im Hinblick auf die Positions- und Identifizierungssaufgabe gegenseitig validieren. Die erste der beiden Sensortechnologien ist das Funkortungssystem bzw. ein funkbasiertes Lokalisierungssystem, mit dem die Positionen von Funktranspondern bis auf wenige Zentimeter genau bestimmt werden kann. Mit Hilfe einer Funktransponder Identifikation und einem darauf hinterlegten Bezug zu einem Objekt oder einer Person liefert das Funkortungssystem zusätzlich zur Position des Objektes oder der Person auch eine Klassifizierungsinformation.

Dieses System muss nicht im Sinne der funktionalen Sicherheit entwickelt und zertifiziert sein, sondern kann im Rahmen von ohnehin genutzten Automatisierungs- oder Logistikfunktionen für eine Sicherheitsanwendung mitgenutzt werden.

Die Funkortung basiert dabei beispielsweise auf einer Triangulation von mindestens einem Funktransponder an der Person oder dem Objekt. Hierzu sind mindestens drei Funkstationen notwendig, die den Funktransponder erfassen können. Dabei ist dem Funkortungssystem der Abstand zwischen den jeweiligen Funkstationen bekannt.

Es handelt sich vorzugsweise um ein Echtzeitortungssystem oder der englischen Entsprechung RTLS (Real-Time-Locating-System). Dabei ist der Funktransponder oder sind die Funktransponder an der Person oder dem Objekt angeordnet. Die Funkstationen erhalten die Funksignale von den Funktranspondern und können so deren Position und damit die Position der Person oder des Objekts bestimmen.

Dabei werden die Positionsdaten von dem Funkortungssystem, nämlich den Funkstationen an die Steuer- und Auswerteeinheit übermittelt.

Bei dem Funkortungssystem kann es sich auch um Funkfrequenzen von Funknetzwerken wie WLAN oder Wi-Fi handeln. Beispielsweise wird ein 2,4 GHz oder ein 5 GHz Band bei einer Bandbreite von 20 MHz oder 40 MHz verwendet.

Bei dem Funkortungssystem kann es sich auch um Funkfrequenzen von Funkverbindungen wie Bluetooth handeln. Dabei werden Funkfrequenzen von 2,402 und 2,480 GHz verwendet. Der Vorteil dieser Frequenzen ist, dass diese weltweit zulassungsfrei betrieben werden dürfen. Je nach verwendeter Leistung können dabei Reichweiten von 0 bis 100 m erreicht werden. Die Reichweiten und die zugehörigen maximalen Leistungen sind in Klassen 1 bis 3 eingeteilt

Das zweite System ist der Identifizierungssensor. Hierbei wird eine Markierung oder optional ein Transponder an der Person oder dem Objekt benötigt. Damit sind für den Identifizierungssensor direkt Identifizierungsinformationen zugänglich. Dieser Identifizierungssensor liefert also Informationen über die Person oder das Objekt, beispielsweise ob es sich bei der Person um eine zulässige Person handelt, die über bestimmte Zugangsberechtigungen verfügt, oder bei einem Objekt, ob es sich um ein zulässiges oder unzulässiges Objekt handelt, oder beispielsweise, welcher Art das Objekt ist und beispielsweise, welche Abmessungen das Objekt hat.

Die beiden diversitären Teilsysteme, nämlich das Funkortungssystem und der Identifikationssensor ergänzen sich sehr gut im Hinblick auf die funktionalen Aufgaben Positionserfassung und Identifikation und können daher wechselseitig zur Validierung und damit zur sicherheitstechnischen Verwendung kombiniert werden.

Eine Validierung einer Objekt- oder Personenidentifikation und einer Objekt- oder Personenposition könnte also schematisch wie folgt ablaufen:
Das Funkortungssystem ermittelt die Position eines Objektes oder einer Person, wobei das Objekt über den Funktransponder geortet wird. Diese Informationen werden der Steuer- und Auswerteeinheit übermittelt.

Optional übermittelt die Steuer- und Auswerteeinheit ein Suchfeld, in dem das Funkortungssystem die Person oder das Objekt identifiziert hat, an den Identifikationssensor.

Der Identifikationssensor prüft, ob in seinem Erfassungsbereich oder seinem Suchfeld eine Person oder ein Objekt passender Größe und ggf. anderer Validierungsparameter wie Form usw. detektiert. Der Identifikationssensor übermittelt die erfassten Daten an die Steuer- und Auswerteeinheit.

Die Steuer- und Auswerteeinheit vergleicht die erfassten Merkmale bzw. die Identifikationsdaten der Person oder des Objektes des Identifikationssensors mit den erfassten Merkmalen bzw. der Kontur der Person oder des Objektes des Funkortungssystems.

Dabei werden die erfasste Position der Person oder des Objektes des Funkortungssystems und die erfassten Identifikationsdaten der Person oder des Objektes des Identifikationssensors miteinander verglichen.

Somit kann sowohl die Personen- bzw. Objektidentifikation, als auch die Personen- bzw. Objektposition wechselseitig durch die beiden diversitären Informationskanäle validiert und so für eine sicherheitstechnische Anwendung geprüft werden.

Gemäß der Erfindung enthält die Markierung die Identifikationsinformation für die Person oder das Objekt, wodurch die Person oder das Objekt eindeutig identifizierbar ist.

Die Erfindung ermöglicht eine sichere Identifikation von Personen oder Objekten in einem Überwachungsbereich und erschließt damit die Möglichkeit, eine Sicherheitsfunktion spezifisch auf eine jeweilige Situation zuzuschneiden. Damit besteht die Möglichkeit, eine Forderung nach einer Risikominderung zu erfüllen, ohne eine Produktivität eines Automatisierungsprozesses zu beeinträchtigen.

Es kann häufig eine bestehende Infrastruktur genutzt werden. Im industriellen Umfeld, aber auch im öffentlichen Bereich, z. B. in Krankenhäusern werden Funkortungssysteme eingesetzt, beispielsweise um fahrerlose Transportfahrzeuge zu orten.

Eine Identifizierung von Personen oder Objekten erfordert gemäß der Erfindung wenig Rechenaufwand. Die Sensorik ist preiswert und häufig kann sogar bestehende Infrastruktur verwendet werden. Zudem verursacht die Identifizierung keine nachteiligen Latenzzeiten, was ein sehr großer Vorteil für die industrielle Sicherheitstechnik ist. Auch für die Mensch-Roboter-Kollaboration, in der Personen in unmittelbarer Nähe zur Gefahrstelle agieren müssen, ist die Erfindung vorteilhaft einsetzbar.

Die physikalischen Wirkprinzipien und deren Stärken und Schwächen der diversitären Sensoren sind vorteilhaft komplementär. Funkortungssysteme weisen beispielsweise aufgrund des Wirkprinzips eine natürliche Immunität gegenüber Fremdlicht auf. Weiter sind Funkortungssysteme wenig empfindlich bei störenden Objekten wie Staub, Spänen oder Nebel. Zudem ist es durch Funkortungssysteme möglich, durch nichtmetallische Wände hindurchzusehen, so dass eine besonders frühe Erkennung von Personen oder Objekten möglich ist. Diese erlaubt eine qualitativ hochwertige Optimierung von Prozessen bei steter Gewährleistung der Arbeitssicherheit.

Bei dem Objekt kann es sich um stationäre oder mobile Gegenstände handeln. Beispielsweise handelt es sich bei dem Objekt um Transportmaterial oder Verarbeitungsmaterial.

In Weiterbildung der Erfindung sind der Identifizierungssensor und die Funkstationen stationär angeordnet oder mobil an einer bewegbaren Maschine angeordnet.

Bei der bewegbaren Maschine bzw. mobilen Maschine kann es sich beispielsweise um ein führerloses Fahrzeug, fahrerloses Fahrzeug bzw. autonomes Fahrzeug, um ein automatisch geführtes Fahrzeug (Automated Guided Vehicles, AGV), um einen automatisch mobilen Roboter (Automated Mobile Robots, AMR), um einen industriemobilen Roboter (Industrial Mobile Robots, IMR) oder um einen Roboter mit bewegbaren Roboterarmen handeln. Die bewegbare Maschine weist somit einen Antrieb auf und kann in verschiedenen Richtungen bewegt werden.

Beispielsweise ist der Identifizierungssensor an der Frontseite eines Fahrzeuges angeordnet, um Informationen aus der Umgebung zu erfassen. Es können auch mehrere Identifizierungssensoren, insbesondere an den Ecken des Fahrzeuges angeordnet sein.

Die Steuer- und Auswerteeinheit ist in diesem Fall ebenfalls an der bewegbaren Maschine angeordnet und mit dem Identifizierungssensor verbunden.

Die Ausgänge der Steuer- und Auswerteeinheit sind mit Funktionseinheiten wie dem Antrieb, den Bremsen und/oder der Lenkung der bewegbaren Maschine verbunden.

Bei der stationären Anordnung kann es sich um eine Anordnung an einer Maschine, einer Förderstrecke, einem Durchgang oder ähnliches handeln.

In Weiterbildung der Erfindung ist das Funkortungssystem ein Ultrabreitband-Funkortungssystem, wobei die verwendete Frequenz im Bereich von 3,1 GHz bis 10,6 GHz ist, wobei die Sendeenergie pro Funkstation maximal 0,5 mW beträgt.

Eine absolute Bandbreite beträgt bei einem Ultrabreitband-Funkortungssystem wenigstens 500 MHz oder eine relative Bandbreite beträgt mindestens 20 % der zentralen Frequenz.

Die Reichweite eines derartigen Funkortungssystems beträgt beispielsweise 0 bis 50 m. Dabei wird die kurze zeitliche Dauer der Funkpulse für die Ortung benutzt.

Das Funkortungssystem sendet damit nur Funkwellen mit einer niedrigen Energie aus. Das System ist sehr flexibel einsetzbar und weist keine Interferenzen auf.

An der Person oder dem Objekt muss minimal nur ein einziger Funktransponder angeordnet sein, der von mindestens drei stationär angeordneten Funkstationen erfasst wird, wobei die Absolutpositionen und der Abstand der Funkstationen zueinander bekannt sind.

Vorzugsweise sind eine Vielzahl, beispielsweise mehr als drei Funkstationen angeordnet, welche mindestens einen Teil des Bewegungsbereichs der Person oder des Objektes überwachen.

Es können auch mindestens zwei oder mehr Funktransponder an der Person oder dem Objekt angeordnet sein. Dadurch kann die Position der Person oder des Objektes genauer identifiziert werden und auch die Ausrichtung der Person oder des Objektes im Stillstand erfasst werden, wenn die Anordnung der Funktransponder an der Person oder dem Objekt bekannt ist.

In Weiterbildung der Erfindung ist der Identifizierungssensor ein RFID-Sensor bzw. ein RFID-Lesegerät oder ein Barcodesensor.

Wird ein RFID-Lesegerät verwendet, ist an der Person oder dem Objekt als Markierung ein RFID-Transponder angeordnet.

Das RFID-Lesegerät weist eine Antennenanordnung zur Kommunikation mit dem RFID-Transponder auf, wobei der RFID-Transponder mindestens eine Spule zur Wechselwirkung mit der Antennenanordnung des RFID-Lesergeräts umfasst.

RFID-Systeme (Radio Frequency Identification) werden in Sender/Empfänger-Systemen zum automatischen und berührungslosen Identifizieren und/oder Lokalisieren von RFID-Transpondern mit Radiowellen verwendet. Ein RFID-System umfasst typischerweise zunächst den RFID-Transponder (auch als "Tag" oder "Funketikett" bezeichnet), der eine Antenne umfasst und sich an der Person oder an dem Objekt befindet. Er umfasst in der Regel einen kennzeichnenden Identifizierungsdaten-Code, der über die Antennenanordnung von dem RFID-Lesegerät des RFID-Systems (auch als "Transceiver" bezeichnet) abgefragt werden kann. Das RFID-Lesegerät umfasst dazu die Antennenanordnung und einen Transceiverschaltkreis (z. B. der EM4095-Chip der Firma EM Microelectronics) zum Auslesen dieser Kennung von dem RFID-Transponder. Zum Auslesen der Kennung von dem RFID-Transponder erzeugt das RFID-Lesegerät typischerweise magnetische Wechselfelder, um Signale an den RFID-Transponder zu übertragen. Der RFID-Transponder ist dazu ausgebildet, nach Erhalt eines entsprechenden Signals vom RFID-Lesegerät Daten, insbesondere ein die Kennung umfassendes Signal als Antwort an das RFID-Lesegerät zurückzusenden, welches dieses mit der Auswerteeinheit auswertet und weiterverarbeitet.

Bei RFID-Systemen erzeugt das RFID-Lesegerät magnetische Wechselfelder, die nicht nur zum Übertragen der Daten vorgesehen sind, sondern auch dazu dienen können, den RFID-Transponder mit Energie zu versorgen.

Ein RFID-System hat damit den Vorteil, dass der RFID-Transponder keine eigene Stromversorgung benötigt und daher flexibel eingesetzt werden kann. Der RFID-Transponder bezieht seine Energie über Funkwellen bzw. Radiowellen aus dem RFID-Lesegerät. Der RFID-Transponder wird über die Antennenanordnung des RFID-Lesegeräts angesprochen und antwortet dem RFID-Lesegerät mit einer in dem RFID-Transponder abgespeicherten Information. Die vom Transponder des RFID-Systems übertragene Information wird von der Antennenanordnung empfangen und kann anschließend in der Auswerteeinheit ausgewertet werden. Die gespeicherte Information auf dem Transponder enthält mindestens eine Kennung, nämlich die Identifizierungsdaten, die den RFID-Transponder identifiziert.

Da die Erkennung des RFID-Transponders über Funkwellen erfolgt, ist das System sehr robust gegenüber Umwelteinflüssen. Daher kann das RFID-Lesesystem mit dem RFID-Transponder in sehr rauen Umgebungen eingesetzt werden, beispielsweise in Industrieumgebungen, wo Schmierstoffe verwendet werden und es beispielsweise zu einem hohen Verschmutzungsgrad kommen kann.

Da die Erkennung des RFID-Transponders über Funkwellen erfolgt, ist im Unterschied zu einer optischen Lösung keine Sichtverbindung zwischen dem RFID-Lesegerät und dem RFID-Transponder notwendig. Daher können RFID-Lesegerät und RFID-Transponder vollständig gekapselt werden, um diese vor schädlichen Umwelteinflüssen zu schützen.

Wenn der Identifizierungssensor als Barcodesensor ausgebildet ist, ist an dem Objekt oder der Person als Markierung ein Barcode, ein Strichcode, ein QR-Code, ein Datamatrixcode oder ähnliches angebracht.

Der Barcodesensor ist dazu ausgebildet, die Identifizierungsdaten des Objektes oder der Person von dem Barcode zu lesen und der Steuer- und Auswerteeinheit zu übermitteln.

In Weiterbildung der Erfindung ist zusätzlich mindestens ein Encoder an dem Objekt angeordnet, um die Position der Person oder des Objektes zu verifizieren.

Der Encoder ist an die Steuer- und Auswerteeinheit angeschlossen und die Steuer- und Auswerteeinheit ist ausgebildet, die Bewegungsinformation der Encoder auszuwerten.

Dadurch liegen Bewegungsinformationen vor, um beispielsweise die Bewegungsinformation der Funktransponder zu testen. So kann von einer gültigen Bewegung ausgegangen werden, wenn der Encoder und die Funktransponder Bewegungsinformation mit einer gleichen Richtung aufweisen.

In Weiterbildung der Erfindung sind zusätzlich zu dem Funkortungssystem ortsauflösende Sensoren angeordnet, um die Position der Person oder des Objektes zu bestimmen.

Der ortsauflösende Sensor prüft, ob in seinem Erfassungsbereich oder seinem Suchfeld eine Person oder ein Objekt passender Größe und ggf. anderer Validierungsparameter wie Form, Geschwindigkeit usw. detektiert. Der ortsauflösende Sensor übermittelt die erfassten Daten an die Steuer- und Auswerteeinheit.

Die Steuer- und Auswerteeinheit vergleicht die erfassten Merkmale bzw. die Kontur der Person oder des Objektes des ortsauflösenden Sensors mit den erfassten Merkmalen bzw. der Kontur der Person oder des Objektes des Funkortungssystems.

Zusätzlich wird die erfasste Position der Person oder des Objektes des Funkortungssystems und die erfasste Position der Person oder des Objektes des ortsauflösenden Sensors miteinander verglichen. Somit kann die Personen- bzw. Objektposition wechselseitig durch die beiden diversitären Informationskanäle validiert und so für eine sicherheitstechnische Anwendung geprüft werden.

In Weiterbildung der Erfindung ist der ortsauflösende Sensor ein Laserscanner.

Laserscanner senden einen Lichtstrahl in einem veränderlichen Raumwinkel aus, wobei die Entfernung des Objektes aufgrund des remittierten Lichtes ermittelt wird, beispielsweise aufgrund der Lichtlaufzeit oder eine Phasenmessung. Der Lichtstrahl wird beispielsweise durch einen rotierenden Spiegel umlaufend in einen Überwachungsbereich ausgesendet, wodurch ein Schutzfeld und/oder ein Warnfeld gebildet wird. Laserscanner können Objekte und Personen sicherheitsgerichtet detektieren.

In Weiterbildung der Erfindung ist mindestens ein räumlich begrenzter Zugangsbereich mit mindestens einer Zugangsstation für eine Anlage angeordnet, wobei die Anlage mindestens einen Sicherheitsbereich und mindestens einen Gefahrenbereich innerhalb des Sicherheitsbereiches aufweist, wobei der Sicherheitsbereich nur über den Zugangsbereich zugänglich ist, so dass der Zugangsbereich von der Person oder von dem Objekt vor dem Erreichen des Sicherheitsbereiches und nach dem Verlassen des Sicherheitsbereiches passierbar ist, wobei der Zugangsbereich nur bei geprüften Personendaten oder geprüften Objektdaten passierbar ist.

Es ist möglich, dass sich eine Person in dem Gefahrenbereich aufhalten kann, da die gefährliche oder gefahrbringende Bewegung in diesem Bereich in einen sicheren Zustand überführt ist, beispielsweise gestoppt ist oder eine sichere niedrige Bewegungsgeschwindigkeit aufweist. Beispielsweise kann in einem benachbarten Gefahrenbereich jedoch eine Produktion weiterlaufen mit einem Produktivbetrieb einer Maschine, da sich dort keine Person befindet.

Bei dem Sicherheitssystem handelt es sich um ein Sicherheitssystem gemäß Maschinensicherheit, beispielsweise gemäß der Norm EN/ISO 13849-1 bzw. der Norm EN/IEC 62061, die beispielsweise den Rahmen für funktionale Sicherheit von sicherheitsbezogenen elektrischen Steuerungssystemen und deren Untersystemen an Maschinen bereitstellt.

Der Zugangsbereich ist ein räumlich begrenzter Zugangsbereich mit einer Zugangsstation, beispielsweise einem Tor oder einer Tür. Nur durch diesen Zugangsbereich ist der Sicherheitsbereich der Anlage zugänglich. Es können auch mehrere Zugangsbereiche angeordnet sein. Gerade bei sehr großen Anlagen mit beispielsweise mehreren Sicherheitsbereichen kann dies sinnvoll sein.

Die Zugangsstation kann beispielsweise elektronische Mittel, wie beispielsweise einen elektronischen Türschalter aufweisen, wodurch überprüfbar ist, ob der Zugangsbereich geöffnet wurde.

Bei der Anlage kann es sich beispielsweise um eine Industrieanlage zur Herstellung von Produkten handeln. Beispielsweise handelt es sich hierbei um einen Teil einer Produktionsanlage für Automobile. Bei der Anlage kann es sich auch um einen Teil einer Maschine oder um eine Anlage mit mehreren Maschinen handeln. Die Anlage weist einen Sicherheitsbereich auf, der nicht von Personen betreten werden darf, wenn die Anlage aktiv ist, da die Person durch Teile der Anlage gefährdet werden kann. Beispielsweise handelt es sich bei der Anlage um einen oder mehrere Roboter, deren gefährlicher Wirkungsbereich innerhalb des Sicherheitsbereiches liegt.

In Weiterbildung der Erfindung ist die Zugangsstation des Zugangsbereichs verriegelbar und nur von zulässigen Personen mit geprüften Personendaten oder zulässigen Objekten mit geprüften Objektdaten passierbar.

Dadurch wird ein unbefugter Zugang verhindert und nur eine zulässige Person, welche nämlich die Markierung trägt, kann den Sicherheitsbereich betreten.

Dadurch wird die Sicherheit für Personen erhöht, da der Sicherheitsbereich nicht mehr unabsichtlich betreten werden kann. Dadurch wird auch eine Verfügbarkeit der Anlage erhöht. Beispielsweise befindet sich an der Zugangsstation eine elektronische Zuhaltung als Verriegelung, die den Zugangsbereich automatisch freigibt, falls die Person das Schlüsselgerät mit sich führt.

In Weiterbildung der Erfindung ist eine gefahrbringende Bewegung einer Maschine in mindestens einem Gefahrenbereich in einen sicheren Zustand überführt, wenn sich die Person oder das Objekt dem Gefahrenbereich nähert oder sich die Person oder das Objekt in dem Gefahrenbereich befindet. Dadurch können die übrigen Teile der Anlage weiter produktiv betrieben werden.

In Weiterbildung der Erfindung ist an den Gefahrenbereich angrenzend ein Warnbereich gebildet, wobei eine gefahrbringende Bewegung einer Maschine in mindestens einem Gefahrenbereich in einen sicheren Zustand überführt ist, wenn sich die Person oder das Objekt in dem Warnbereich befindet.

Der Warnbereich führt dazu, dass sich Personen außerhalb des Warnbereiches und außerhalb des Gefahrenbereiches im Sicherheitsbereich bewegen dürfen. Sobald sich jedoch eine Person in dem Warnbereich befindet, wird die Bewegung in dem Gefahrenbereich in den sicheren Zustand überführt. Der Warnbereich bildet eine definierte festgelegte Zone, um einen sicheren Zustand im Gefahrenbereich einzuleiten. Je nach Nachlaufzeit der Maschine kann der Warnbereich größer oder kleiner dimensioniert werden. Der Gefahrenbereich ist hierbei nur über den Warnbereich zugänglich.

In Weiterbildung der Erfindung ist mindestens der Teil der Anlage in einem sicheren Zustand, in dessen Bereich die Person oder das Objekt erfasst ist. Dadurch können die übrigen Teile der Anlage weiter produktiv betrieben werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein Sicherheitssystem 1 zur Lokalisierung und Identifikation einer Person;
- Figur 2: ein Sicherheitssystem 1 zur Lokalisierung und Identifikation eines Objekts;
- Figur 3: ein Sicherheitssystem 1 zur Lokalisierung und Identifikation einer Person oder eines Objekts mit stationär angeordneten Funkstationen;

- Figur 4: ein Sicherheitssystem 1 zur Lokalisierung und Identifikation einer Person oder eines Objekts mit mobil angeordneten Funkstationen;
- Figur 5: ein räumlich begrenzter Zugangsbereich mit mindestens einer Zugangsstation für eine Anlage.

In den nachfolgenden Figuren sind identische Teile mit identischen Bezugszeichen versehen.

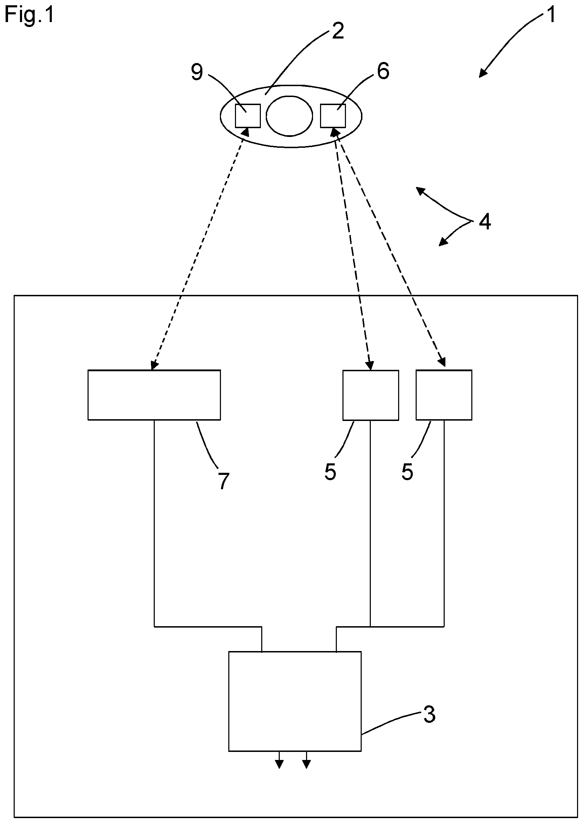

Figur 1 zeigt ein Sicherheitssystem 1 zur Lokalisierung und Identifikation einer Person 2, mit einer Steuer- und Auswerteeinheit 3, mit mindestens einem Funkortungssystem 4, mit mindestens einem Identifizierungssensor 7 zur Identifizierung der Person 2, wobei an der Person eine Markierung 9 angeordnet ist, wobei das Funkortungssystem 4 angeordnete Funkstationen 5 aufweist, wobei an der Person 2 mindestens ein Funktransponder 6 angeordnet ist, wobei mittels dem Funkortungssystem 4 Positionsdaten der Person 2 ermittelbar sind, wobei die Positionsdaten von der Funkstation 5 des Funkortungssystems 4 an die Steuer- und Auswerteeinheit 3 übermittelbar sind, und mittels dem Identifizierungssensor 7 Identifikationsdaten von der Markierung 9 an der Person 2 ermittelbar sind, wobei die Identifikationsdaten von dem Identifizierungssensor 7 an die Steuer- und Auswerteeinheit 3 übermittelbar sind, wobei die Steuer- und Auswerteeinheit 3 ausgebildet ist, die Positionsdaten des Funkortungssystems 4 und die Identifikationsdaten des Identifizierungssensor 7 zu vergleichen und bei gültiger Übereinstimmung geprüfte Personendaten zu bilden.

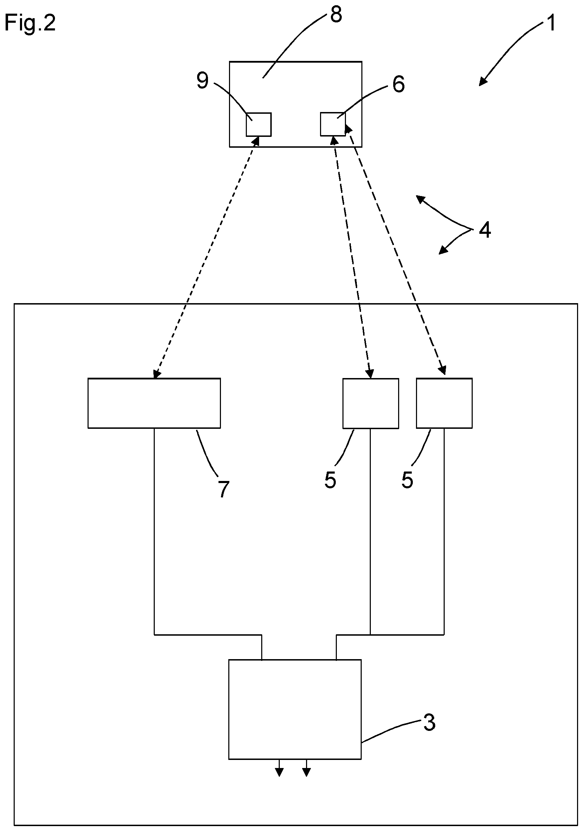

Figur 2 zeigt analog zu Figur 1 ein Sicherheitssystem 1 zur Lokalisierung und Identifikation eines Objektes 8, mit einer Steuer- und Auswerteeinheit 3, mit mindestens einem Funkortungssystem 4, mit mindestens einem Identifizierungssensor 7 zur Identifizierung des Objektes 8.

Die Steuer- und Auswerteeinheit 3 weist Eingänge, eine Verarbeitungseinheit und Ausgänge auf. An die Eingänge sind der Identifikationssensor 7 und die Funkstationen 5 angeschlossen. Die Steuer- und Auswerteeinheit 3 kann eine modulare Steuer- und Auswerteeinheit sein, die über eine Software programmierbar ist.

Bei den Ausgängen der Steuer- und Auswerteeinheit 3 kann es sich insbesondere um redundante Sicherheitsausgänge handeln. Dabei handelt es sich beispielsweise um halbleitergesteuerte Schaltausgänge, um beispielsweise einen Antrieb einer Maschine sicher abzuschalten.

Die erste der beiden Sensortechnologien ist das Funkortungssystem 4 bzw. ein funkbasiertes Lokalisierungssystem, mit dem die Positionen von Funktranspondern 6 bis auf wenige Zentimeter genau bestimmt werden kann. Mit Hilfe einer Funktransponder Identifikation und einem darauf hinterlegten Bezug zu einem Objekt 8 oder einer Person 2 liefert das Funkortungssystem 4 optional zusätzlich zur Position des Objektes 8 oder der Person 2 auch eine Klassifizierungsinformation oder eine Identifizierungsinformation.

Das zweite System ist der Identifizierungssensor 7. Hierbei wird eine Markierung 9 oder optional ein Transponder an der Person 2 oder dem Objekt 8 benötigt. Damit sind für den Identifizierungssensor 7 direkt Identifizierungsinformationen zugänglich. Dieser Identifizierungssensor 7 liefert also Informationen über die Person 2 oder das Objekt 8, beispielsweise ob es sich bei der Person 2 um eine zulässige Person 2 handelt, die über bestimmte Zugangsberechtigungen verfügt oder bei einem Objekt 8, ob es sich um ein zulässiges oder unzulässiges Objekt 8 handelt oder beispielsweise, welcher Art das Objekt 8 ist und beispielsweise, welche Abmessungen das Objekt 8 hat.

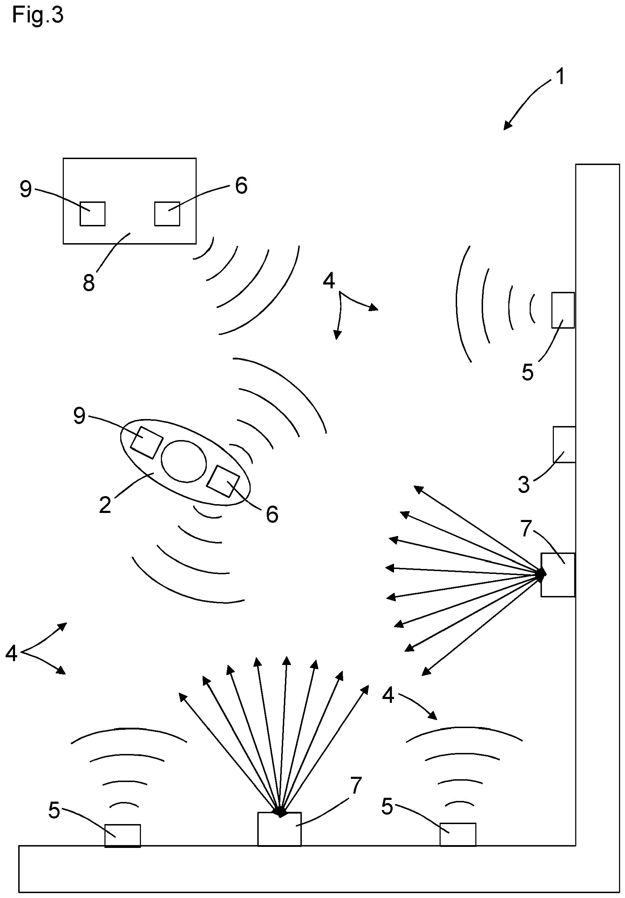

Eine Validierung einer Objekt- oder Personenidentifikation und einer Objekt- oder Personenposition könnte gemäß Figur 3 wie folgt ablaufen:
Das Funkortungssystem 4 ermittelt die Position eines Objektes 8 oder einer Person 2, wobei das Objekt 8 oder die Person über den Funktransponder 6 geortet wird. Diese Informationen werden der Steuer- und Auswerteeinheit 3 übermittelt.

Optional übermittelt die Steuer- und Auswerteeinheit 3 ein Suchfeld, in dem das Funkortungssystem 4 die Person 2 oder das Objekt 8 identifiziert hat, an den Identifikationssensor 7.

Der Identifikationssensor 7 prüft, ob in seinem Erfassungsbereich oder seinem Suchfeld eine Person 2 oder ein Objekt 8 passender Größe und ggf. anderer Validierungsparameter wie Form usw. detektiert. Der Identifikationssensor 7 übermittelt die erfassten Daten an die Steuer- und Auswerteeinheit 3.

Die Steuer- und Auswerteeinheit 3 vergleicht die erfassten Merkmale bzw. die Identifikationsdaten der Person 2 oder des Objektes 8 des Identifikationssensors 7 mit den erfassten Merkmalen bzw. der Kontur der Person 2 oder des Objektes 8 des Funkortungssystems 4.

Dabei werden die erfasste Position der Person 2 oder des Objektes 8 des Funkortungssystems 4 und die erfassten Identifikationsdaten der Person 2 oder des Objektes 8 des Identifikationssensors 7 miteinander verglichen.

Somit kann sowohl die Personen- bzw. Objektidentifikation, als auch die Personen- bzw. Objektposition wechselseitig durch die beiden diversitären Informationskanäle validiert und so für eine sicherheitstechnische Anwendung geprüft werden.

Gemäß Figur 3 enthält die Markierung 9 die Identifikationsinformation für die Person 2 oder das Objekt 8, wodurch die Person 2 oder das Objekt 8 eindeutig identifizierbar ist.

Gemäß Figur 3 sind der Identifizierungssensor 7 und die Funkstationen 5 stationär angeordnet.

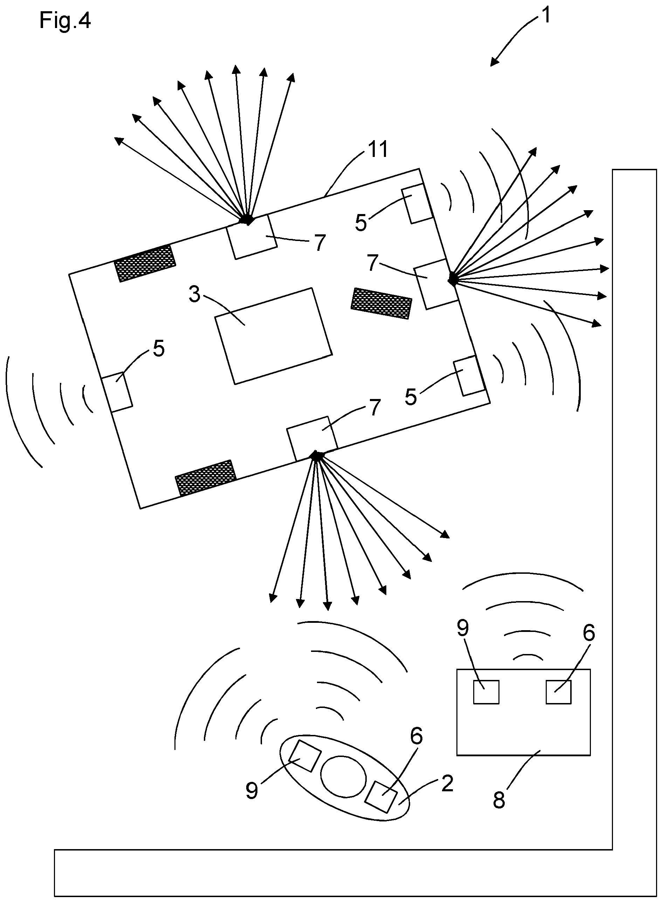

Gemäß Figur 4 sind der Identifizierungssensor 7 und die Funkstationen 5 mobil an einer bewegbaren Maschine 11 angeordnet.

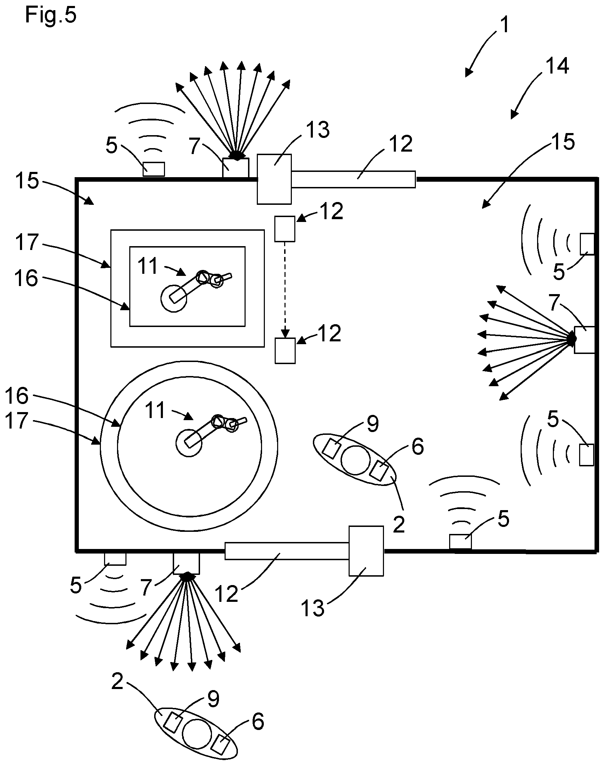

Bei der bewegbaren Maschine 11 bzw. mobilen Maschine kann es sich beispielsweise um ein führerloses Fahrzeug oder gemäß Figur 5 um einen Roboter mit bewegbaren Roboterarmen handeln. Die bewegbare Maschine 11 weist somit einen Antrieb auf und kann in verschiedenen Richtungen bewegt werden.

Optional ist das Funkortungssystem 4 ein Ultrabreitband-Funkortungssystem, wobei die verwendete Frequenz im Bereich von 3,1 GHz bis 10,6 GHz ist, wobei die Sendeenergie pro Funkstation maximal 0,5 mW beträgt.

An der Person 2 oder dem Objekt 8 muss minimal nur ein einziger Funktransponder 6 angeordnet sein, der von mindestens drei stationär angeordneten Funkstationen 5 erfasst wird, wobei der Abstand der Funkstationen 5 bekannt ist.

Vorzugsweise sind eine Vielzahl, beispielsweise mehr als drei Funkstationen 5 angeordnet, welche mindestens einen Teil des Bewegungsbereichs der Person 2 oder des Objektes 8 überwachen.

Es können auch mindestens zwei oder mehr Funktransponder 6 an der Person 2 oder dem Objekt 8 angeordnet sein. Dadurch kann die Position der Person 2 oder des Objektes 8 genauer identifiziert werden und auch die Ausrichtung der Person 2 oder des Objektes 8 im Stillstand erfasst werden, wenn die Anordnung der Funktransponder 6 an der Person 2 oder dem Objekt 8 bekannt ist.

Optional ist der Identifizierungssensor 7 ein RFID-Sensor bzw. ein RFID-Lesegerät oder ein Barcodesensor.

Wird ein RFID-Lesegerät verwendet ist an der Person 2 oder dem Objekt 8 als Markierung 9 ein RFID-Transponder angeordnet.

Wenn der Identifizierungssensor 7 als Barcodesensor ausgebildet ist, ist an dem Objekt 8 oder der Person 2 als Markierung 9 ein Barcode, ein Strichcode, ein QR-Code, ein Datamatrixcode oder ähnliches angebracht.

Der Barcodesensor ist dazu ausgebildet, die Identifizierungsdaten des Objektes 8 oder der Person 2 von dem Barcode zu lesen und der Steuer- und Auswerteeinheit 3 zu übermitteln.

Optional ist zusätzlich mindestens ein Encoder an der Person 2 oder dem Objekt 8 angeordnet, um die Position der Person 2 oder des Objektes 8 zu verifizieren.

Der Encoder ist an die Steuer- und Auswerteeinheit 3 angeschlossen und die Steuer- und Auswerteeinheit 3 ist ausgebildet, die Bewegungsinformation der Encoder auszuwerten.

Gemäß Figur 3 und 4 können zusätzlich zu dem Funkortungssystem 4 ortsauflösende Sensoren angeordnet sein, um die Position der Person oder des Objektes zu bestimmen.

Der ortsauflösende Sensor prüft, ob in seinem Erfassungsbereich oder seinem Suchfeld eine Person 2 oder ein Objekt 8 passender Größe und ggf. anderer Validierungsparameter wie Form, Geschwindigkeit usw. detektiert. Der ortsauflösende Sensor übermittelt die erfassten Daten an die Steuer- und Auswerteeinheit 3.

Die Steuer- und Auswerteeinheit 3 vergleicht die erfassten Merkmale bzw. die Kontur der Person 2 oder des Objektes 8 des ortsauflösenden Sensors mit den erfassten Merkmalen bzw. der Kontur der Person 2 oder des Objektes 8 des Funkortungssystems 4. Optional ist der ortsauflösende Sensor ein Laserscanner.

Gemäß Figur 5 ist mindestens ein räumlich begrenzter Zugangsbereich 12 mit mindestens einer Zugangsstation 13 für eine Anlage 14 angeordnet, wobei die Anlage 14 mindestens einen Sicherheitsbereich 15 und mindestens einen Gefahrenbereich 16 innerhalb des Sicherheitsbereiches 15 aufweist, wobei der Sicherheitsbereich 15 nur über den Zugangsbereich 12 zugänglich ist, so dass der Zugangsbereich 12 von der Person 2 oder von dem Objekt 8 vor dem Erreichen des Sicherheitsbereiches 15 und nach dem Verlassen des Sicherheitsbereiches 15 passierbar ist, wobei der Zugangsbereich 12 nur bei geprüften Personendaten oder geprüften Objektdaten passierbar ist.

Es ist möglich, dass sich eine Person 2 in dem Gefahrenbereich 16 aufhalten kann, da die gefährliche oder gefahrbringende Bewegung in diesem Bereich in einen sicheren Zustand überführt ist, beispielsweise gestoppt ist oder eine sichere niedrige Bewegungsgeschwindigkeit aufweist. Beispielsweise kann in einem benachbarten Gefahrenbereich 16 jedoch eine Produktion weiterlaufen mit einem Produktivbetrieb einer Maschine, da sich dort keine Person befindet.

Der Zugangsbereich 12 ist ein räumlich begrenzter Zugangsbereich 12 mit einer Zugangsstation 13, beispielsweise einem Tor oder einer Tür. Nur durch diesen Zugangsbereich 12 ist der Sicherheitsbereich 15 der Anlage 14 zugänglich. Es können auch mehrere Zugangsbereiche 12 angeordnet sein. Gerade bei sehr großen Anlagen mit beispielsweise mehreren Sicherheitsbereichen 15 kann dies sinnvoll sein.

Die Zugangsstation 13 kann beispielsweise elektronische Mittel, wie beispielsweise einen elektronischen Türschalter aufweisen, wodurch überprüfbar ist, ob der Zugangsbereich 12 geöffnet wurde.

Bei der Anlage 14 kann es sich beispielsweise um eine Industrieanlage zur Herstellung von Produkten handeln. Beispielsweise handelt es sich hierbei um einen Teil einer Produktionsanlage für Automobile. Bei der Anlage 14 kann es sich auch um einen Teil einer Maschine oder um eine Anlage 14 mit mehreren Maschinen handeln. Die Anlage 14 weist einen Sicherheitsbereich 15 auf, der nicht von Personen 2 betreten werden darf, wenn die Anlage 14 aktiv ist, da die Person 2 durch Teile der Anlage 14 gefährdet werden kann. Beispielsweise handelt es sich bei der Anlage 14 um einen oder mehrere Roboter, deren gefährlicher Wirkungsbereich innerhalb des Sicherheitsbereiches 15 liegt.

Optional ist die Zugangsstation 13 des Zugangsbereichs 12 verriegelbar und nur von zulässigen Personen 2 mit geprüften Personendaten oder zulässigen Objekten 8 mit geprüften Objektdaten passierbar.

Dadurch wird ein unbefugter Zugang verhindert und nur eine zulässige Person 2, welche nämlich die Markierung 9 trägt, kann den Sicherheitsbereich 15 betreten.

Optional ist an den Gefahrenbereich 16 angrenzend ein Warnbereich 17 gebildet, wobei eine gefahrbringende Bewegung einer Maschine in mindestens einem Gefahrenbereich 16 in einen sicheren Zustand überführt ist, wenn sich die Person 2 oder das Objekt 8 in dem Warnbereich 17 befindet.

Der Warnbereich 17 führt dazu, dass sich Personen 2 außerhalb des Warnbereiches 17 und außerhalb des Gefahrenbereiches 16 im Sicherheitsbereich 15 bewegen dürfen. Sobald sich jedoch eine Person 2 in dem Warnbereich 17 befindet, wird die Bewegung in dem Gefahrenbereich 16 in den sicheren Zustand überführt. Der Warnbereich 17 bildet eine definierte festgelegte Zone, um einen sicheren Zustand im Gefahrenbereich 16 einzuleiten. Je nach Nachlaufzeit der Maschine kann der Warnbereich 17 größer oder kleiner dimensioniert werden. Der Gefahrenbereich 16 ist hierbei nur über den Warnbereich 17 zugänglich.

Optional ist mindestens der Teil der Anlage in einem sicheren Zustand, in dessen Bereich die Person 2 oder das Objekt 8 erfasst ist. Dadurch können die übrigen Teile der Anlage 14 weiter produktiv betrieben werden.

Bezugszeichen:
1 Sicherheitssystem
2 Person
3 Steuer- und Auswerteeinheit
4 Funkortungssystem
5 Funkstationen
6 Funktransponder
7 Identifizierungssensor
8 Objekt
9 Markierung
11 bewegbare Maschine
12 Zugangsbereich
13 Zugangsstation
14 Anlage
15 Sicherheitsbereich
16 Gefahrenbereich
17 Warnbereich

## Patentansprüche

1. Sicherheitssystem (1) zur Lokalisierung und Identifikation einer Person (2) oder eines Objektes (8), mit einer Steuer- und Auswerteeinheit (3), mit mindestens einem Funkortungssystem (4), mit mindestens einem Identifizierungssensor (7) zur Identifizierung der Person (2) oder des Objektes (8), wobei an der Person (2) oder dem Objekt (8) eine Markierung (9) angeordnet ist, wobei das Funkortungssystem (4) angeordnete Funkstationen (5) aufweist,
wobei an der Person (2) oder dem Objekt (8) mindestens ein Funktransponder (6) angeordnet ist,
wobei mittels dem Funkortungssystem (4) Positionsdaten der Person (2) oder des Objektes (8) ermittelbar sind,
wobei die Positionsdaten von der Funkstation (5) des Funkortungssystems (4) an die Steuer- und Auswerteeinheit (3) übermittelbar sind,
und mittels dem Identifizierungssensor (7) Identifikationsdaten von der Markierung an der Person (2) oder des Objekts (8) ermittelbar sind,
wobei die Identifikationsdaten von dem Identifizierungssensor (7) an die Steuer- und Auswerteeinheit (3) übermittelbar sind,
wobei die Steuer- und Auswerteeinheit (3) ausgebildet ist, die Positionsdaten des Funkortungssystems (4) und die Identifikationsdaten des Identifizierungssensors (7) zu vergleichen und bei gültiger Übereinstimmung geprüfte Personendaten oder geprüfte Objektdaten zu bilden.

2. Sicherheitssystem (1) nach Anspruch 1, **dadurch gekennzeichnet, dass** der Identifizierungssensor (7) und die Funkstationen (5) stationär angeordnet sind oder mobil an einer bewegbaren Maschine (11) angeordnet sind.

3. Sicherheitssystem (1) nach mindestens einem der vorhergehenden Ansprüche, **dadurch gekennzeichnet, dass** das Funkortungssystem (4) ein Ultrabreitband-Funkortungssystem ist, wobei die verwendete Frequenz im Bereich von 3,1 GHz bis 10,6 GHz ist, wobei die Sendeenergie pro Funkstation (5) maximal 0,5 mW beträgt.

4. Sicherheitssystem (1) nach mindestens einem der vorhergehenden Ansprüche, **dadurch gekennzeichnet, dass** der Identifizierungssensor (7) ein RFID-Sensor oder ein Barcodesensor ist.

5. Sicherheitssystem (1) nach mindestens einem der vorhergehenden Ansprüche, **dadurch gekennzeichnet, dass** zusätzlich mindestens ein Encoder angeordnet ist, um die Position des Objektes (8) zu verifizieren.

6. Sicherheitssystem (1) nach mindestens einem der vorhergehenden Ansprüche, **dadurch gekennzeichnet, dass** zusätzlich zu dem Funkortungssystem (4) mindestens ein ortsauflösender Sensor angeordnet ist, um die Position der Person (2) oder des Objektes (8) zu bestimmen.

7. Sicherheitssystem (1) nach Anspruch 6, **dadurch gekennzeichnet, dass** der ortsauflösende Sensor ein Laserscanner ist.

8. Sicherheitssystem (1) nach mindestens einem der vorhergehenden Ansprüche, **dadurch gekennzeichnet, dass**, mindestens ein räumlich begrenzter Zugangsbereich (12) mit mindestens einer Zugangsstation (13) für eine Anlage (14) angeordnet ist, wobei
die Anlage (14) mindestens einen Sicherheitsbereich (15) und mindestens einen Gefahrenbereich (16) innerhalb des Sicherheitsbereiches (15) aufweist, wobei der Sicherheitsbereich (15) nur über den Zugangsbereich (12) zugänglich ist, so dass der Zugangsbereich (12) von der Person (2) oder von dem Objekt (8) vor dem Erreichen des Sicherheitsbereiches (15) und nach dem Verlassen des Sicherheitsbereiches (15) passierbar ist,
wobei der Zugangsbereich (12) nur bei geprüften Personendaten oder geprüften Objektdaten passierbar ist.

9. Sicherheitssystem (1) nach mindestens einem der vorhergehenden Ansprüche, **dadurch gekennzeichnet, dass** die Zugangsstation (13) des Zugangsbereichs (12) verriegelbar ist und nur von zulässigen Personen (2) oder zulässigen Objekten (8) passierbar ist.

10. Sicherheitssystem (1) nach mindestens einem der vorhergehenden Ansprüche, **dadurch gekennzeichnet, dass** eine gefahrbringende Bewegung einer bewegbaren Maschine (11) in mindestens einem Gefahrenbereich (16) in einen sicheren Zustand überführt ist, wenn sich die Person (2) oder das Objekt (8) dem Gefahrenbereich (16) nähert oder sich die Person (2) oder das Objekt (8) in dem Gefahrenbereich (16) befindet.

11. Sicherheitssystem (1) nach mindestens einem der vorhergehenden Ansprüche, **dadurch gekennzeichnet, dass** an den Gefahrenbereich (16) angrenzend ein Warnbereich (17) gebildet ist, wobei eine gefahrbringende Bewegung einer bewegbaren Maschine (11) in mindestens einem Gefahrenbereich (16) in einen sicheren Zustand überführt ist, wenn sich die Person (2) oder das Objekt (8) in dem Warnbereich (17) befindet.

12. Sicherheitssystem (1) nach mindestens einem der vorhergehenden Ansprüche, **dadurch gekennzeichnet, dass** mindestens der Teil einer Anlage (14) in einem sicheren Zustand ist, in dessen Bereich die Person (2) oder das Objekt (8) erfasst ist.

13. Verfahren mit einem Sicherheitssystem (1) zur Lokalisierung und Identifikation einer Person (2) oder eines Objektes (8), mit einer Steuer- und Auswerteeinheit (3), mit mindestens einem Funkortungssystem (4), mit mindestens einem Identifizierungssensor (7) zur Identifizierung der Person (2) oder des Objektes (8), wobei an der Person (2) oder dem Objekt eine Markierung (9) angeordnet wird, wobei
das Funkortungssystem (4) angeordnete Funkstationen (5) aufweist,
wobei an der Person (2) oder dem Objekt (8) mindestens ein Funktransponder (6) angeordnet wird,
wobei mittels dem Funkortungssystem (4) Positionsdaten der Person (2) oder des Objektes (8) ermittelt werden,
wobei die Positionsdaten von der Funkstation (5) des Funkortungssystems (4) an die Steuer- und Auswerteeinheit (3) übermittelt werden,
und mittels dem Identifizierungssensor (7) Identifikationsdaten von der Markierung an der Person (2) oder des Objekts (8) ermittelt werden,
wobei die Identifikationsdaten von dem Identifizierungssensor (7) an die Steuer- und Auswerteeinheit (3) übermittelt werden,
wobei die Steuer- und Auswerteeinheit (3) die Positionsdaten des Funkortungssystems (4) und die Identifikationsdaten des Identifizierungssensors (7) vergleicht und bei gültiger Übereinstimmung geprüfte Personendaten oder geprüfte Objektdaten bildet.

## Claims

1. A safety system (1) for the localization and identification of a person (2) or an object (8), comprising a control and evaluation unit (3), at least one radio location system (4), and at least one identification sensor (7) for identifying the person (2) or the object (8), wherein a marking (9) is arranged at the person (2) or the object (8), wherein
the radio location system (4) has arranged radio stations (5),
wherein at least one radio transponder (6) is arranged at the person (2) or the object (8),
wherein position data of the person (2) or of the object (8) can be determined by means of the radio location system (4),
wherein the position data can be transmitted from the radio station (5) of the radio location system (4) to the control and evaluation unit (3),
and identification data can be determined from the marking at the person (2) or the object (8) by means of the identification sensor (7),
wherein the identification data can be transmitted from the identification sensor (7) to the control and evaluation unit (3),
wherein the control and evaluation unit (3) is configured to compare the position data of the radio location system (4) and the identification data of the identification sensor (7) and, in the event of a valid agreement, to form checked personal data or checked object data.

2. A safety system (1) in accordance with claim 1, **characterized in that** the identification sensor (7) and the radio stations (5) are arranged in a stationary manner or are arranged in a mobile manner at a movable machine (11).

3. A safety system (1) in accordance with at least one of the preceding claims, **characterized in that** the radio location system (4) is an ultra-wideband radio location system, with the frequency used being in the range from 3.1 GHz to 10.6 GHz, with the transmission energy per radio station (5) amounting to at most 0.5 mW.

4. A safety system (1) in accordance with at least one of the preceding claims, **characterized in that** the identification sensor (7) is an RFID sensor or a barcode sensor.

5. A safety system (1) in accordance with at least one of the preceding claims, **characterized in that** at least one encoder is additionally provided to check the position of the object (8).

6. A safety system (1) in accordance with at least one of the preceding claims, **characterized in that**, in addition to the radio location system (4), at least one spatially resolving sensor is provided to determine the position of the person (2) or of the object (8).

7. A safety system (1) in accordance with claim 6, **characterized in that** the spatially resolving sensor is a laser scanner.

8. A safety system (1) in accordance with at least one of the preceding claims, **characterized in that** at least one spatially limited access zone (12) having at least one access station (13) for a system (14) is provided, wherein
the system (14) has at least one safety zone (15) and at least one danger zone (16) within the safety zone (15),
wherein the safety zone (15) is only accessible via the access zone (12) so that the access zone (12) can be passed through by the person (2) or by
the object (8) before reaching the safety zone (15) and after leaving the safety zone (15),
wherein the access zone (12) can only be passed through with checked personal data or checked object data.

9. A safety system (1) in accordance with at least one of the preceding claims, **characterized in that** the access station (13) of the access zone (12) can be locked and can only be passed through by permitted persons (2) or permitted objects (8).

10. A safety system (1) in accordance with at least one of the preceding claims, **characterized in that** a dangerous movement of a movable machine (11) in at least one danger zone (16) is transformed into a safe state when the person (2) or the object (8) approaches the danger zone (16) or the person (2) or the object (8) is located in the danger zone (16).

11. A safety system (1) in accordance with at least one of the preceding claims, **characterized in that** a warning zone (17) is formed adjacent to the danger zone (16), wherein a dangerous movement of a movable machine (11) in at least one danger zone (16) is transformed into a safe state when the person (2) or the object (8) is located in the warning zone (17).

12. A safety system (1) in accordance with at least one of the preceding claims, **characterized in that** at least the part of a system (14) in whose region the person (2) or the object (8) is detected is in a safe state.

13. A method using a safety system (1) for the localization and identification of a person (2) or an object (8), comprising a control and evaluation unit (3), at least one radio location system (4), and at least one identification sensor (7) for identifying the person (2) or the object (8),
wherein a marking (9) is arranged at the person (2) or the object, wherein the radio location system (4) has arranged radio stations (5),
wherein at least one radio transponder (6) is arranged at the person (2) or the object (8),
wherein position data of the person (2) or the object (8) are determined by means of the radio location system (4),
wherein the position data are transmitted from the radio station (5) of the radio location system (4) to the control and evaluation unit (3),
and identification data are determined from the marking at the person (2) or the object (8) by means of the identification sensor (7),
wherein the identification data are transmitted from the identification sensor (7) to the control and evaluation unit (3),
wherein the control and evaluation unit (3) compares the position data of the radio location system (4) and the identification data of the identification sensor (7) and, in the event of a valid agreement, forms checked personal data or checked object data.

## Revendications

1. Système de sécurité (1) pour localiser et identifier une personne (2) ou un objet (8), comprenant une unité de commande et d'évaluation (3), au moins un système de radiolocalisation (4), au moins un capteur d'identification (7) pour identifier la personne (2) ou l'objet (8), dans lequel un marquage (9) est disposé sur la personne (2) ou sur l'objet (8),
le système de radiolocalisation (4) présente des stations radio (5) mises en place,
au moins un transpondeur radio (6) est disposé sur la personne (2) ou sur l'objet (8),
des données de position de la personne (2) ou de l'objet (8) peuvent être déterminées au moyen du système de radiolocalisation (4),
les données de position peuvent être transmises de la station radio (5) du système de radiolocalisation (4) à l'unité de commande et d'évaluation (3), et
au moyen du capteur d'identification (7), des données d'identification peuvent être déterminées à partir du marquage sur la personne (2) ou sur l'objet (8),
les données d'identification peuvent être transmises du capteur d'identification (7) à l'unité de commande et d'évaluation (3),
l'unité de commande et d'évaluation (3) est réalisée pour comparer les données de position du système de radiolocalisation (4) et les données d'identification du capteur d'identification (7) et pour, en cas de concordance valable, former des données vérifiées de la personne ou des données vérifiées de l'objet.

2. Système de sécurité (1) selon la revendication 1, **caractérisé en ce que** le capteur d'identification (7) et les stations radio (5) sont disposés de manière stationnaire ou sont disposés de manière mobile sur une machine mobile (11).

3. Système de sécurité (1) selon l'une au moins des revendications précédentes, **caractérisé en ce que** le système de radiolocalisation (4) est un système de radiolocalisation à ultra large bande, la fréquence utilisée étant dans la plage de 3,1 GHz à 10,6 GHz, l'énergie d'émission par station radio (5) étant au maximum de 0,5 mW.

4. Système de sécurité (1) selon l'une au moins des revendications précédentes, **caractérisé en ce que** le capteur d'identification (7) est un capteur RFID ou un capteur à code-barres.

5. Système de sécurité (1) selon l'une au moins des revendications précédentes, **caractérisé en ce qu'**en supplément, il est prévu au moins un encodeur pour vérifier la position de l'objet (8).

6. Système de sécurité (1) selon l'une au moins des revendications précédentes, **caractérisé en ce qu'**en supplément au système de radiolocalisation (4), il est prévu au moins un capteur à résolution spatiale pour définir la position de la personne (2) ou de l'objet (8).

7. Système de sécurité (1) selon la revendication 6, **caractérisé en ce que** le capteur à résolution spatiale est un scanner laser.

8. Système de sécurité (1) selon l'une au moins des revendications précédentes, **caractérisé en ce qu'**il est prévu au moins une zone d'accès (12) limitée dans l'espace, comportant au moins une station d'accès (13) pour une installation (14),
l'installation (14) présentant au moins une zone de sécurité (15) et au moins une zone de danger (16) à l'intérieur de la zone de sécurité (15),
la zone de sécurité (15) n'étant accessible que par la zone d'accès (12), de sorte que la zone d'accès (12) peut être franchie par la personne (2) ou par l'objet (8) avant d'atteindre la zone de sécurité (15) et après avoir quitté la zone de sécurité (15),
la zone d'accès (12) ne pouvant être franchie que si les données de la personne ou les données de l'objet sont vérifiées.

9. Système de sécurité (1) selon l'une au moins des revendications précédentes, **caractérisé en ce que** la station d'accès (13) de la zone d'accès (12) peut être verrouillée et ne peut être franchie que par des personnes autorisées (2) ou des objets autorisés (8).

10. Système de sécurité (1) selon l'une au moins des revendications précédentes, **caractérisé en ce qu'**un mouvement dangereux d'une machine mobile (11) dans au moins une zone de danger (16) est converti en un état sûr lorsque la personne (2) ou l'objet (8) s'approche de la zone de danger (16) ou lorsque la personne (2) ou l'objet (8) se trouve dans la zone de danger (16).

11. Système de sécurité (1) selon l'une au moins des revendications précédentes, **caractérisé en ce qu'**une zone d'avertissement (17) est formée de manière adjacente à la zone de danger (16), un mouvement dangereux d'une machine mobile (11) dans au moins une zone de danger (16) étant converti en un état sûr lorsque la personne (2) ou l'objet (8) se trouve dans la zone d'avertissement (17).

12. Système de sécurité (1) selon l'une au moins des revendications précédentes, **caractérisé en ce que** au moins la partie d'une installation (14), au niveau de laquelle la personne (2) ou l'objet (8) est détecté(e), est dans un état sûr.

13. Procédé utilisant un système de sécurité (1) pour localiser et identifier une personne (2) ou un objet (8), comprenant une unité de commande et d'évaluation (3), au moins un système de radiolocalisation (4), au moins un capteur d'identification (7) pour identifier la personne (2) ou l'objet (8),
dans lequel un marquage (9) est disposé sur la personne (2) ou sur l'objet (8),
le système de radiolocalisation (4) présente des stations radio (5) mises en place,
au moins un transpondeur radio (6) est disposé sur la personne (2) ou sur l'objet (8),
des données de position de la personne (2) ou de l'objet (8) sont déterminées au moyen du système de radiolocalisation (4),
les données de position sont transmises de la station radio (5) du système de radiolocalisation (4) à l'unité de commande et d'évaluation (3), et
au moyen du capteur d'identification (7), des données d'identification sont déterminées à partir du marquage sur la personne (2) ou sur l'objet (8), les données d'identification sont transmises du capteur d'identification (7) à l'unité de commande et d'évaluation (3),
l'unité de commande et d'évaluation (3) compare les données de position du système de radiolocalisation (4) et les données d'identification du capteur d'identification (7) et, en cas de concordance valable, forme des données vérifiées de la personne ou des données vérifiées de l'objet.
